Europäisches Patentamt

European Patent Office

Office européen des brevets

(11) Numéro de publication: **0 189 039**
**A2**

(12) **DEMANDE DE BREVET EUROPEEN**

(21) Numéro de dépôt: **86100075.0**

(22) Date de dépôt: **04.01.86**

(51) Int. Cl.⁴: **G 06 K 19/06**

(30) Priorité: **21.01.85 CH 252/85**

(43) Date de publication de la demande: **30.07.86**
**Bulletin 86/31**

(84) Etats contractants désignés: **AT BE CH DE FR GB IT LI LU NL SE**

(71) Demandeur: **Hegi, Paul, 13, chemin du Gamay, CH-1233 Bernex (CH)**

(72) Inventeur: **Hegi, Paul, 13, chemin du Gamay, CH-1233 Bernex (CH)**

(74) Mandataire: **Micheli, Michel-Pierre et al, MICHELI & CIE 118, Rue du Rhône Case Postale 47, CH-1211 Genève 6 (CH)**

(54) Carte munie d'un microprocesseur et/ou d'au moins une mémoire électronique.

(57) Cette carte comporte des contacts (8) et se compose de plusieurs couches de matières plastiques (1, 2; 11, 12, 13, 14) compatibles. L'âme (1, 2) comporte au moins un noyau local (2) dur présentant un évidement (3). Deux couches de protection (13, 14) de plus faible épaisseur que l'âme recouvrent les deux faces supérieure et inférieure. Un film (6) comprend un circuit imprimé dont les sorties sont reliées à un circuit intégré (7) comportant un microprocesseur et/ou au moins une mémoire électronique est disposé entre l'âme (1, 2) et l'une des couches (13, 14) de protection à l'endroit du noyau local (2) dur. Le circuit intégré (7) est logé au moins partiellement dans l'évidement (3) de ce noyau (2) dur. Les sorties du circuit imprimé sont reliées par des conducteurs (9) aux contacts (8) de la carte, ces conducteurs étant également situés entre l'âme (1, 2) et ladite couche de protection (13).

Carte munie d'un microprocesseur et/ou d'au moins une mémoire
électronique

La présente invention se rapporte aux cartes type "cartes
de crédit" qui sont munies d'un microprocesseur et/ou d'au moins
une mémoire électronique pouvant stocker des données de tous
genres telles que codes individuels, crédits en une ou plusieurs
monnaies, données médicales personnelles, etc., et le cas échéant effectuer certaines opérations sur ces données selon un programme déterminé contenu dans le microprocesseur en réponse à
des signaux qui lui sont délivrés par un appareillage électronique extérieur à la carte avec lequel celle-ci peut être branchée
à l'aide de contacts apparents reliés au microprocesseur et aux
mémoires contenus dans la carte.

Il existe de telles cartes qui toutefois présentent l'inconvénient que le microprocesseur ou les mémoires peuvent être accessibles de l'extérieur de la carte et séparés de celle-ci ce
qui peut permettre le décodage des informations contenues dans
ceux-ci.

Il est également connu du brevet US 3.702.464 une carte dans
laquelle les conducteurs du circuit imprimé reliant le circuit intégré aux contacts sont apposés sur l'une des surfaces d'une des
couches de matériel plastique. De telles cartes n'ont pas pu être
réalisées car lors du laminage des couches de matière plastique les
conducteurs fondent en coulant et se rejoignent formant des courts-
circuits.

La présente invention a pour but de réaliser une telle carte
électronique qui soit inviolable.

La présente invention a pour objet une carte électronique
munie d'un microprocesseur et/ou d'au moins une mémoire électronique obviant aux inconvénients précités. Cette carte comportant
des contacts accessibles de l'extérieur de celle-ci, caractérisée
par le fait qu'elle se compose de plusieurs couches de matières
plastiques compatibles, de compositions, et de caractéristiques différentes, formant un ensemble monolithique, par le fait que ces couches sont au moins au nombre de trois, une âme comportant au moins un noyau local dur présentant au moins un évidement et deux couches de protection de plus faible épaisseur que l'âme recouvrant les deux faces supérieure et inférieure de cette âme; par le fait qu'un film comprenant un circuit imprimé dont les sorties sont reliées à un circuit intégré comportant un microprocesseur et/ou au moins une mémoire électronique est disposé entre l'âme et l'une des couches de protection à l'endroit du noyau local dur, le circuit intégré étant logé au moins partiellement dans l'évidement de ce noyau dur; et par le fait que les sorties du circuit imprimé sont reliées par des conducteurs aux contacts de la carte, ces conducteurs étant également situés entre l'âme et ladite couche de protection.

Le dessin annexé illustre schématiquement et à titre d' exemple une forme d'exécution de la carte électronique selon l'invention.

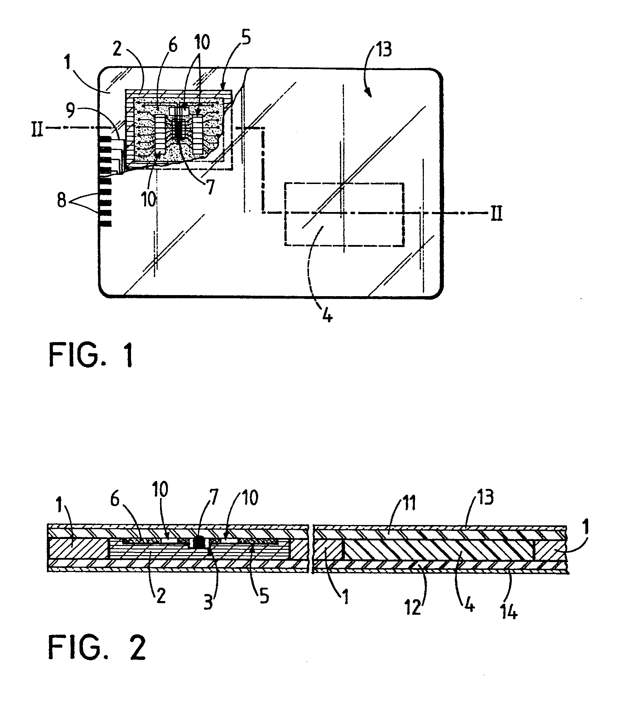

La figure 1 est une vue de dessus de la carte, une partie étant arrachée.

La figure 2 est une coupe à plus grande échelle suivant la ligne II-II de la figure 1.

La figure 3 illustre de dessus une variante de cette carte.

La figure 4 est une coupe partielle de la carte illustrée à la figure 3.

La carte électronique illustrée au dessin comporte plusieurs couches de matières plastiques compatibles, de compositions et de caractéristiques différentes, rendues monolithiques par laminage à chaud.

La couche centrale ou âme est composite formée d'une feuille de matière plastique 1 comprenant deux ouvertures traversantes, l'une renfermant un noyau dur 2 muni d'un évidement 3 et l'autre renfermant une plaquette de matière plastique 4 incorporant une identification ou marquage sous forme de filigrane.

Dans la forme d'exécution illustrée le noyau dur 2 comporte un évidement 3 non traversant débouchant dans une creusure 5 que comporte l'une des faces de ce noyau 2.

Une portion de film 6 découpée, comportant au moins un trou, porte un circuit imprimé dont les sorties sont reliées d'une part aux bornes d'un circuit intégré 7 situé dans le trou. Il s'agit d'une "tape automatic bonded chip" actuellement couramment utilisée en électronique.

Cette portion de film 6 est placée dans la creusure 5 du noyau dur 2, le circuit intégré ou chip 7 étant placé dans l'évidement 3 de ce noyau dur 2.

Les bornes de sortie du circuit imprimé porté par le film 6 sont reliées aux contacts 8, accessibles depuis l'extérieur de la carte, par des conducteurs 9.

La portion de film 6 portant le circuit imprimé comporte des ouvertures 10 placées de telle manière que toutes les connexions reliant les bornes de sorties du circuit imprimé aux bornes du ou des circuits intégrés traversent ces ouvertures 10.

La carte illustrée comporte encore des feuilles plastiques imprimées 11,12 situées de part et d'autre de l'âme 1,2 ainsi que des couches de protection transparentes 13,14 situées sur les faces libres des feuilles imprimées 11,12.

Les cinq couches, soit l'âme 1,2, les feuilles imprimées 11,12 et les couches de protection 13,14 sont rendues monolithiques par laminage à chaud, les différents plastiques formant ces couches étant compatibles.

Du fait des ouvertures 10 pratiquées dans la portion de film 6, la feuille imprimée 13 est rendue solidaire, par le laminage à chaud du noyau dur 2 autour d'une partie au moins de toutes les connexions du circuit imprimé porté par ce film 6. Ainsi, il est impossible de séparer l'âme 1,2 de la couche qui lui est superposée, dans cet exemple la couche 11, sans détruire le circuit imprimé ce qui rend la carte inviolable.

A titre d'exemple, on peut mentionner que l'âme 1,2 peut être en plastique opaque blanc d'une épaisseur de 0,40 mm, que les feuilles imprimées, portant des indications d'usage de la carte, une marque de fabrique ou tout autre indication utile à l'utilisateur, peuvent être d'une épaisseur de 0,20 mm teintées dans la masse par exemple, et que les couches de protection sont transparentes d'une épaisseur de 0,06 mm pour que les inscriptions portées par les feuilles imprimées soient visibles.

Le film 6 portant le circuit imprimé est généralement en Kapton (marque déposée par Du Pont de Nemours) et même si cette matière plastique est incompatible avec les matières plastiques formant l'âme 1,2 et la couche imprimée 11, la carte est inviolable grâce aux ouvertures 10 pratiquées dans ce film 6 permettant une liaison intime entre les couches 1,2 et 11 autour de chaque connexion du circuit imprimé et donc la destruction de celles-ci lors d'une tentative de séparation de ces deux couches.

Du fait du noyau dur 2 de l'âme 1,2 au niveau du film 6 portant le circuit imprimé et le circuit intégré, et du fait que ce circuit intégré est logé dans un évidement de ce noyau dur 2 on obtient d'une part que l'épaisseur de la carte soit constante malgré l'épaisseur du circuit intégré 7 qui est plus grande que celle du film 6 et d'autre part une bonne protection de la partie électronique, circuit intégré et circuit imprimé, de la carte contre les chocs, pressions, déformations, etc. que peut subir cette carte.

De nombreuses variantes de la carte peuvent être prévues, le nombre de circuits intégrés 7 est arbitraire et dépend des fonctions de la carte, ces circuits intégrés peuvent être des mémoires électroniques ou des microprocesseurs ou une combinaison de ces éléments.

Dans une variante l'une ou l'autre, voire les deux couches imprimées peuvent être supprimées, les couches de protection 13, 14 étant alors directement liées à l'âme 1,2. Dans ces cas ces couches de protection ne sont pas nécessairement transparentes, et peuvent elles-mêmes être teintées dans la masse ou comporter des inscriptions dans leur masse.

Il est évident qu'une exécution de la carte sans le noyau 4 comportant le filigrane peut être prévue.

En variante, l'évidement 3 du noyau dur 2 dans lequel est logé le circuit intégré pourrait être traversant et une fois le circuit intégré logé dans ce trou, le reste de celui-ci est rempli d'une résine époxy ou silicone pour enrober complètement ledit circuit intégré.

Dans une autre variante, les conducteurs reliant les contacts de la carte aux bornes du circuit intégré peuvent être portés par le film 6, il se peut alors qu'une partie de ce film dépasse le noyau dur 2.

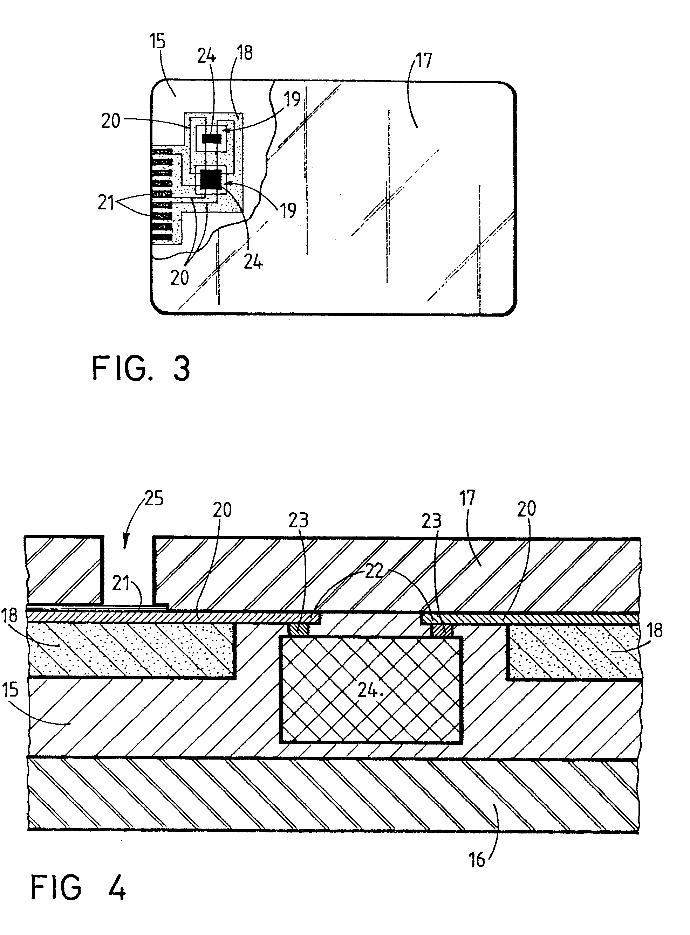

C'est précisément une telle variante qui est illustrée aux figures 3 et 4, elle présente notamment l'avantage de faciliter grandement la soudure des conducteurs collés sur le film aux bornes du ou des circuits intégrés.

Dans cette variante illustrée aux figures 3 et 4 la carte est composée d'une âme 15 munie sur ses faces inférieure et supérieure de deux couches de protection 16,17; cette âme et ces couches étant en matériau plastique laminable à chaud.

La partie électronique de la carte est entièrement portée par un film 18 en Kapton (marque déposée) présentant des ouvertures 19, ici deux dans l'exemple illustré, destinée à recevoir des circuits intégrés.

La surface supérieur au moins de ce film 18 comporte des conducteurs en cuivre étamé 20 qui sont collés au film 18. Ces conducteurs ont une extrémité reliée à un contact 21 dont la surface libre est généralement dorée et une autre extrémité s'étendant au-delà du bord du film à l'intérieur d'une des ouvertures 19. Cette extrémité 22 est destinée à être soudée sur un contact 23 d'un circuit intégré 24. Les contacts 21 sont accessibles à partir de l'extérieur de la carte par une fente 25 pratiquée dans la couche de protection 17.

Lorsque les conducteurs 20 sont collés sur le film 18, on peut facilement souder chaque extrémité 21 des conducteurs 20 sur le contact correspondant du ou des circuits intégrés 24. En effet les conducteurs 20 étant en cuivre on ne risque pas que ceux-ci fondent ou coulent. D'autre part l'absence de support de ces extrémités facilite cette soudure et empêche la création de courts-circuits.

Une fois la partie électronique ainsi terminée le film 18 muni des conducteurs 20 et des circuits intégrés 24, est placé dans la position voulue entre l'âme 15 et la couche de protection 17.

Enfin les trois couches 15,16,17 sont laminées à chaud ce qui a pour effet de thermosouder ses couches les unes aux autres et également de remplir tous les vides situés autour des conducteurs 20 et/ou des circuits imprimés par déformation plastique de l'âme dans laquelle viennent s'incruster les circuits imprimés 24.

La carte ainsi obtenue est extrêmement robuste, le film, les conducteurs et les circuits intégrés étant complètement noyés dans la masse de matière plastique. De plus, l'âme 15 est thermosoudée à la couche de protection 17 entre chaque conducteur 20 de sorte que la carte est inviolable; toute tentative de séparer les couches 17 et 15 entraîne la destruction des connexions reliant les contacts 21 aux circuits intégrés 24.

## REVENDICATIONS

1. Carte électronique munie d'un microprocesseur et/ou d'au moins une mémoire électronique comportant des contacts accessibles de l'extérieur, caractérisée par le fait qu'elle se compose de plusieurs couches de matières plastiques compatibles, de compositions et de caractéristiques différentes, formant un ensemble monolithique, par le fait que ces couches sont au moins au nombre de trois, une âme comportant au moins un noyau local dur présentant au moins un évidement, et deux couches de protection de plus faible épaisseur que l'âme recouvrant les deux faces supérieure et inférieure de cette âme; par le fait qu'un film comprenant un circuit imprimé dont les sorties sont reliées à un circuit intégré comportant un microprocesseur et/ou au moins une mémoire électronique est disposé entre l'âme et l'une des couches de protection à l'endroit du noyau local dur, le circuit intégré étant logé au moins partiellement dans l'évidement de ce noyau dur; et par le fait que les sorties du circuit imprimé sont reliées par des conducteurs aux contacts de la carte, ces conducteurs étant également situés entre l'âme et ladite couche de protection.

2. Carte selon la revendication 1, caractérisée par le fait qu'elle comporte encore au moins une couche de matière plastique compatible logée entre l'âme et l'une des couches de protection, cette couche intermédiaire étant imprimée ou teintée dans la masse.

3. Carte selon la revendication 1 ou la revendication 2, caractérisée par le fait que le film comporte des ouvertures traversées par toutes les connexions reliant le circuit intégré aux bornes de sorties du circuit imprimé de sorte que l'âme et la couche adjacente   forment une masse monolithique entourant une portion au moins de chacune de ces connexions.

4.    Carte selon les revendications 1, 2 ou 3, caractérisée par le fait que le ou les évidements du noyau dur sont traversants, une résine remplissant le reste de ces passages autour du circuit intégré.

5.    Carte selon l'une des revendications précédentes, caractérisée par le fait qu'une des couches de protection au moins est transparente.

6.    Carte selon l'une des revendications précédentes, caractérisée par le fait que son âme comporte un second noyau muni d'un filigrane.

7.    Carte électronique munie d'un microprocesseur et/ou d'au moins une mémoire électronique comportant des contacts accessibles de l'extérieur se composant d'au moins trois couches de matières plastiques compatibles de composition et de caractéristiques différentes formant par laminage à chaud un ensemble monolithique; soit une âme et deux couches de protection de plus faible épaisseur  recouvrant les deux faces de cette âme, caractérisée par le fait qu'elle comporte un film, sur l'une des faces duquel au moins, des conducteurs en cuivre étamé sont collés, l'une des extrémités de certains de ces conducteurs au moins étant électriquement reliée à des contacts dorés, également collés sur le film, par le fait que le film comporte au moins une ouverture dans laquelle s'étend l'autre extrémité de certains au moins desdits conducteurs, par le fait que ces dernières extrémités des conducteurs sont soudées aux bornes d'au moins un circuit intégré situé dans ladite ouverture du film; et par le fait qu'après le laminage des trois couches, le film et le circuit électronique qu'il porte étant positionné entre l'âme et une couche de protec-tion, l'âme remplit tous les espaces libres situés autour du ou des circuits intégrés et des conducteurs dans ladite ouverture du film; et par le fait qu'une des couches de protection comporte une fente donnant accès aux contacts portés par le film.

FIG. 1

FIG. 2

FIG. 3

FIG 4